## Europäisches Patentamt
## European Patent Office
## Office européen des brevets

(11) Veröffentlichungsnummer: **0 352 344**
**A1**

(12) **EUROPÄISCHE PATENTANMELDUNG**

(21) Anmeldenummer: 88112077.8

(22) Anmeldetag: 27.07.88

(51) Int. Cl.⁴: **F16D 3/00 , F16D 3/18 , F16D 3/74**

(43) Veröffentlichungstag der Anmeldung:
31.01.90 Patentblatt 90/05

(84) Benannte Vertragsstaaten:
**BE DE ES FR GB IT NL SE**

(71) Anmelder: **KTR KUPPLUNGSTECHNIK GMBH**
**Rodder Damm**
**D-4440 Rheine 1(DE)**

(72) Erfinder: **Scherner, Helmut, Dipl.- Ing.**
**Kiebitzgrund 21**
**D-4530 Ibbenbüren(DE)**
Erfinder: **Wibbeling, Reinhard, Dipl.Ing.**
**Sandstrasse 13**
**D-4446 Hörstel(DE)**
Erfinder: **Schürhörster, Josef**
**Südhoek 22**
**D-4440 Rheine 11(DE)**

(74) Vertreter: **Arendt, Helmut, Dipl.-Ing.**
**Hubertusstrasse 2**
**D-3000 Hannover 1(DE)**

(54) Steckbare axial- und winkelbewegliche Zahnkupplung.

㋲ Bei einer steckbaren axial- und winkelbeweglichen Zahnkupplung zur elastischen Drehmoment-übertragung ist vorgesehen, daß der Kupplungsflansch (1) und die innenverzahnte Kupplungshülse (3) durch ein Element (4) aus hochelastischem Material miteinander verbunden sind. Als elastomeres Material kann Gummi verwendet werden, der mit den zu verbindenden Teilen (1, 3) zusammenvulkanisiert ist.

Fig. 1

## Steckbare axial- und winkelbewegliche Zahnkupplung

Die Erfindung betrifft eine steckbare axial- und winkelbewegliche Zahnkupplung zur elastischen Drehmomentübertragung mit einer an der anzutreibenden Maschine befestigbaren außenverzahnten Kupplungsnabe mit balligen Zähnen, die in einen an der Antriebsmaschine befestigbaren Kupplungsflansch mit einer Innenverzahnung greift.

Als drehelastische Kupplungen mit Elementen für die Kompensation radialer, axialer und winkliger Verlagerungen der angeschlossenen Maschinen sind Ausführungen auf dem Markt bekannt, bei welchen die Drehmomentübertragung durch auf Verdrehschub beanspruchte ringförmige Gummielemente ermöglicht wird. Die Verdrehschubelemente bieten große radiale Verlagerungsmöglichkeiten bei raltiv geringen Rückstellkräften. Das die radiale Verlagerung ermöglichende ringförmige Gummielement verbindet zwei mit der Antriebsmaschine verbindbare Stahlflansche, die außerdem mit einer innenverzahnten Kupplungshülse verschraubt sind. In die Kupplungshülse greift eine an der anzutreibenden Maschine befestigte außenverzahnte Kupplungsnabe. Die Nabenzähne sind mit balligen Zahnflanken versehen, um eine winklige Verlagerung der beiden Maschinen auszugleichen. Die Montage der Kupplung erfordert jedoch Öffnungen im Gehäuse der Antriebsmaschine. Außerdem sind die Verschraubungsarbeiten umständlich und damit zeitaufwendig.

Als weitere hochdrehelastische Kupplungen mit ringförmigen, auf Drehschub beanspruchten Gummielementen sind Ausführungen bekannt, deren Abtriebsseiten mit den entsprechenden Naben verschraubt werden. Diese Ausführungen erfordern einen großen Montageaufwand. Verlagerungen werden in radialer, winkeliger und axialer Richtung voll vom Gummielement aufgenommen, was bei axialen Verlagerungen zu hohen Reaktionskräften führt, da das Gummi bei Druckbelastung verhältnismäßig steif ist. Um diese Mängel zu beseitigen,wurden Kupplungen konzipiert, bei denen am Außen- oder Innendurchmesser angeordnete Stifte steckbar montiert werden können. Die Fertigung dieser Stift-/Steckverbindung ist aufwendig und teuer. Der die Stifte aufnehmende Flansch sowie das entsprechende Gegenstück müssen mit engen Fertigungstoleranzen hergestellt werden, da ein Verdrehspiel zu Klappergeräuschen und Verschleiß in der Steckverbindung führt. Außerdem ist es notwendig, die Stifte zur Vermeidung von Reibrostbildung durch eine Kunststoffbeschichtung zu schützen. Ein weiterer Nachteil der Steckverbindung besteht darin, daß nur ein Axialversatz aufgenommen werden kann. Winkliger Wellenversatz muß bei dieser Ausführung nach wie vor durch Formänderungsarbeit des Gummis kompensiert werden.

Bei einer weiteren auf dem Markt bekannten Kupplung greift die mit einer balligen Außenverzahnung versehene Kupplungsnabe unmittelbar in einen mit einer Innenverzahnung versehenen Kupplungsflansch aus Kunststoff, der seinerseits direkt mit der Antriebsmaschine verschraubt wird. Das Gehäuse der Antriebsmaschine braucht keine Montageöffnung aufzuweisen, sondern greift über den äußeren Teil des Kupplungsflansches, da es möglich ist, nach seiner Befestigung an der Antriebsmaschine die an dem anzutreibenden Aggregat befestigte Kupplungsnabe mit der zugehörigen Außenverzahnung in die Innenverzahnung des Flansches zu schieben. Die letztgenannte Ausführung ist jedoch als drehstarr zu bezeichnen und gewährleistet auch bei einer Ausbildung des Kupplungsflansches aus Kunststoff keine genügende Schwingungsdämpfung.

Ziel der Erfindung ist es, die Vorteile einer steckbaren Kupplung mit Verdrehschubelementen zur Schwingungsdämpfung mit der guten Montierbarkeit der vorgenannten drehstarren Kupplung zu verbinden und eine entsprechend gestaltete Kupplung vorzuschlagen, wobei die Aufnahme der Wellenverlagerung nach Möglichkeit ganz oder zum überwiegenden Teil durch die Steckverbindung aufgenommen wird.

Die erfindungsgemäße Lösung zeichnet sich dadurch aus, daß der Kupplungsflansch aus einem an der Antriebsmaschine zu befestigenden Ring und einer Kupplungshülse mit einer Innenverzahnung besteht, die durch wenigstens ein Element aus elastomerem Material miteinander verbunden sind. Das elastomere Material kann vorzugsweise in Form eines Gummiringes in Anwendung kommen, mit welchem die Teile des Kupplungsflansches durch Vulkanisierung verbunden sind. Hierbei besteht die Möglichkeit, den Befestigungsring aus Metall und die Kupplungshülse aus Kunststoff zu fertigen.

Unterschiedlich ausgebildete Ringe aus elastomerem Material bzw. die Wahl verschiedener Steifigkeiten des Materials ermöglichen unterschiedliche Elastizitäten der Kupplung. Eine besonders hohe Elastizität der gesamten Kupplung ist jedoch durch das Hintereinandersetzen zweier Ringe aus elastischem Material erreichbar. An der Verbindungsstelle der beiden Ringe können diese zusätzlich auf der Kupplungshülse mit Hilfe von Nadellagern bzw. Gleitringen abgestützt werden.

Eine weitere Variationsmöglichkeit ist durch eine Teilung der Kupplungshülse in zwei koaxial angeordnete Teile gegeben, die durch einen gemeinsamen Ring aus elastomerem Material zusammenvulkanisiert sind. In eines der Teile greift der Befestigungs ring mit einer Außenverzahnung während das zweite Hülsenteil mit der Kupplungsnabe, die an der angetriebenen Maschine befestigt ist, in Zahneingriff steht. Dadurch ergibt sich eine doppelkardanische Ausführung zur Kompensation besonders großer Maschinenverlagerungen.

Zur Verbindung der Maschinenaggregate, zwischen welchen eine elastische Drehmomentübertragung stattfinden soll, sind lediglich die bereits an den Maschinen befestigten Kupplungsteile ineinander zu schieben. Zusätzliche, den Monatageaufwand erhöhende Verschraubungsarbeiten entfallen, da der Befestigungsring mit der Kupplungshülse bereits vor der Aufstellung an der Antriebsmaschine und die Kupplungsnabe an der anzutreibenden Maschine befestigt werden können Es ist möglich, neben Axialversatz auch Winkelversatz ohne zusätzliche Gummiverformung zu übertragen. Bedingt durch ein geringes Verzahnungsspiel wird es möglich, auch geringen Radialversatz aufzunehmen. Ein grundlegender Vorteil der Erfindung besteht darin, daß der die Verzahnung aufnehmende Flansch mit der Verzahnung eine Einheit bildet, so daß ein Verstiften des Flansches bzw. Bohren entfällt. Die Ausbildung des innenverzahnten Flansches als Spritzgußteil aus Polyamid ermöglicht eine rationelle, äußerst preiswerte Fertigung, da jede Nacharbeit entfällt. Außerdem wird durch Ausbildung des antriebsseitigen Flansches aus Kunststoff - Spritzguß ein äußerst günstiges Fertigungsniveau erreicht. Die Wahl des Werkstoffes Sintermetall für die verzahnte Kupplungsnabe ermöglicht eine wartungsfreie Kupplung, da keine Schmierung der Verzahnung notwendig ist.

In der Zeichnung sind mehrere Ausführungsbeispiele der Erfindung rein schematisch dargestellt und nachstehend erläutert. Es zeigen:

Fig. 1 eine Kupplung einfachster Bauart im Längsschnitt,

Fig. 2 den Längsschnitt durch eine Kupplung mit einer aus

zwei zusammenvulkanisierten Teilen bestehenden Kupplungshülse und

Fig. 3 den Längsschnitt durch eine Kupplung mit zwei hintereinander gesetzten Ringen aus elastomerem Material.

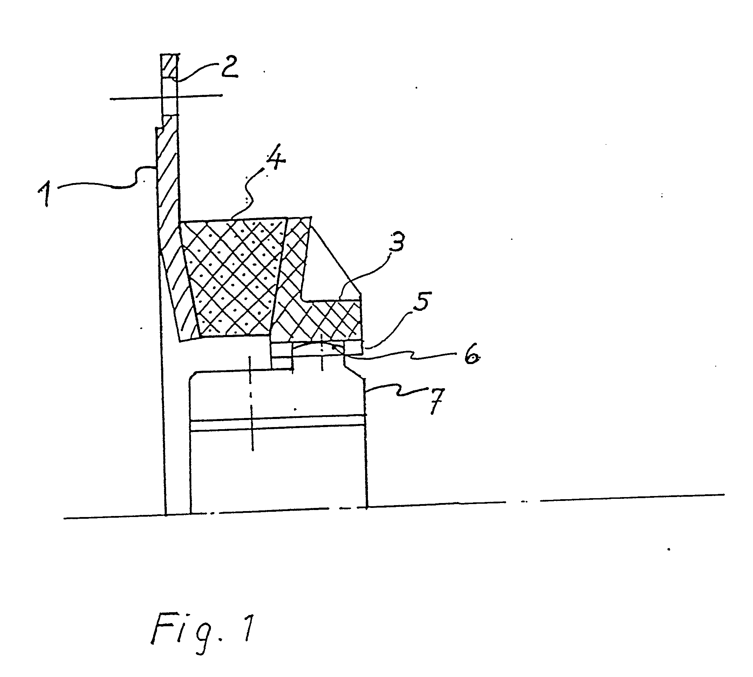

Die Kupplung gemäß Figur 1 besteht aus einem Befestigungsring 1 mit gleichmäßig auf seinem Umfang verteilten Öffnungen 2, durch welche Schrauben zur Befestigung, beispielsweise an der Schwungscheibe einer Antriebsmaschine, greifen können.

Der Befestigungsring 1 ist mit einer Kupplungshülse 3 über einen Gummiring 4 zusammenvulkanisiert. Die Kupplungshülse besteht beispielsweise aus Kunststoff und ist mit einer Innenverzahnung 5 versehen, in welche die ballig geformten Zähne 6 einer Nabe 7 greifen, welche auf der Welle einer anzutreibenden Maschine befestigbar ist.

Der Befestigungsring 1 und die an diesen anvulkanisierte Kupplungshülse 3 bilden zusammen einen an der Antriebsmaschine befestigbaren, mehrteiligen und innenverzahnten Kupplungsflansch.

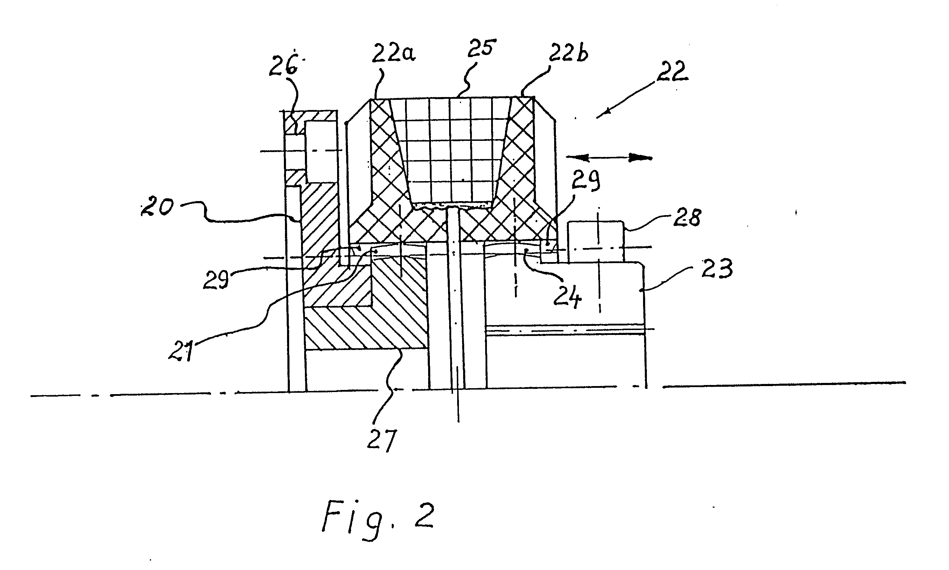

Bei der Ausführungsform gemäß Figur 2 greift der Befestigungsring 20 mit einer Außenverzahnung 21 ebenso wie die Kupplungsnabe 23 mit einer Außenverzahnung 24 in eine innvenverzahnte, mehrteilige Kupplungshülse 22. Die beiden Teile 22a und 22b der Kupplungshülse sind mit Hilfe eines Gummiringes 25 zusammenvulkanisiert und bilden dadurch eine doppelkardanische Kupplungsausführung.

Der Befestigungsring 20 ist ebenfalls, wie bei dem Ausführungsbeispiel gemäß Figur 1 mit Verschraubungsöffnungen 26 versehen, um ihn an der Antriebsmaschine beispielsweise am Schwungrad zu befestigen. Ein konzentrisch am Befestigungsring 20 angeordneter Zahnkranz 27, der die Außenverzahnung 21 trägt, kann mit diesem beispielsweise verschraubt oder in anderer bekannter Weise verbunden sein. Mit 28 ist ein auf der Kupplungsnabe 23 angeordneter Anschlag zur axialen Verschiebungsbegrenzung bezeichnet.

Bei dem Ausführungsbeispiel gemäß Figur 2 besteht der Kupplungs flansch demnach aus dem Befestigungsring 20, dem Zahnkranz 27 und der aus den Teilen 22a, 22b sowie dem Gummiring 25 bestehenden Kupplungshülse 22.

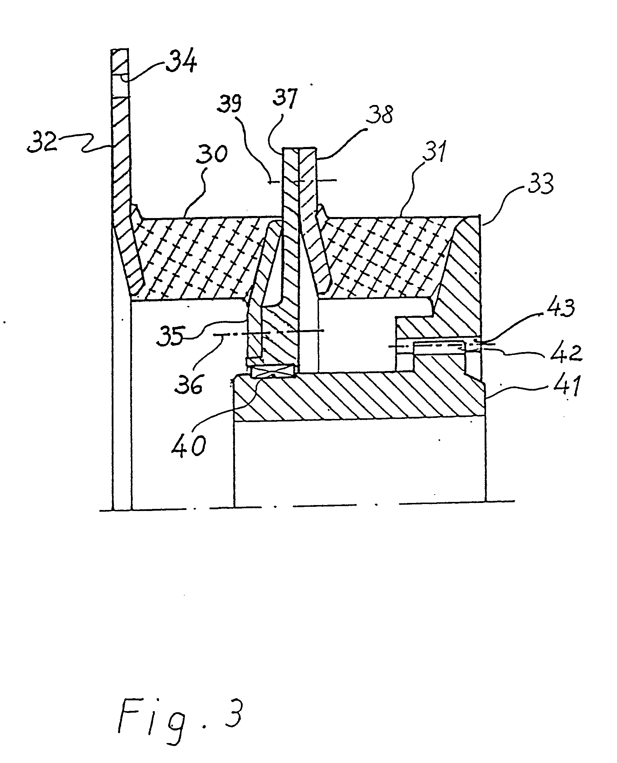

Die Ausführung nach Figur 3 zeigt zwei koaxiale gummielastische Ringe 30 und 31, mit deren Hilfe der Befestigungsring 32 mit der innenverzahnten Kupplungshülse 33 verbunden ist. Der Ring 32 ist wie üblich mit Hilfe von Schrauben, welche durch Öffnungen 34 greifen, mit der Antriebsmaschine verbindbar. An den Befestigungsring 32 ist der Gummiring 30 anvulkanisiert. Er trägt an seinem gegenüberliegenden Ende einen anvulkanisierten Verbindungsring 35 und ist mit Hilfe von Schrauben 36 an einem Stützring 37 befestigt. Der zweite gummielastische Ring 31 ist an einer Seite an der innenverzahnten Kupplungshülse 33 anvulkanisiert und weist einen der Kupplungshülse gegenüberliegenden, ebenfalls anvulkanisierten Befestigungsring 38 auf. Mit diesem Ring ist der gummielastische Ring 31 mit dem Stützring 37 verschraubt. Die lediglich durch eine Mittellinie angedeuteten Befestigungsschrauben sind mit 39 bezeichnet.

Zur Abstützung des aus dem Befestigungsring 32, den gummieelastischen Ringen 30 und 31 sowie dem Stützring 37 und der Kupplungshülse 33 bestehenden Kupplungsflansches dient bei dem gezeigten Ausführungsbeispiel ein Nadellager 40. Es kann ggf. durch einen Gleitring ersetzt werden.

Wie bei den anderen beiden Beispielen bereits gezeigt, greift die Kupplungsnabe 41 mit einer Außenverzahnugn 42 in die Innenverzahnung 43 der Kupplungshülse 33.

Die Ausführungsform gemäß Figur 3 bildet durch die Hintereinanderschaltung zweier Ringe aus Gummi oder einem anderen elastomeren Material eine hoch- oder doppelelastische Ausführung.

**Ansprüche**

1. Steckbare axial- und winkelbewegliche Zahnkupplung zur elastischen Drehmomentübertragung mit einer an der angetriebenen Maschine befestigbaren außenverzahnten Kupplungsnabe mit balligen Zähnen, die in einen an der Antriebsmaschine befestigbaren Kupplungsflansch mit einer Innenverzahnung greift, dadurch gekennzeichnet, daß der Kupplungsflansch aus einem an der Antriebsmaschine zu befestigenden Ring (1, 20, 32) und einer Kupplungshülse (3, 22, 33) mit Innenverzahnung (5, 29, 43) besteht, die durch ein Element (4) aus elastomerem Material miteinander verbunden sind.

2. Kupplung nach Anspruch 1, dadurch gekennzeichnet, daß als Element aus elastomerem Material ein Gummiring (4, 30, 31) eingesetzt ist, mit welchem die Teile des Kupplungsflansches durch Vulkanisieren verbunden sind.

3. Kupplung nach den Ansprüchen 1 oder 2, dadurch gekennzeichnet, daß der Befestigungsring (1, 20, 32) aus Metall bzw. Kunststoff besteht und die Kupplungshülse (3, 22, 33) aus Kunststoff gefertigt ist.

4. Kupplung nach einem oder mehreren der Ansprüche 1 bis 4, dadurch gekennzeichnet, daß die Kupplungshülse (22) aus zwei koaxialen, miteinander vulkanisierten Teilen (22a, 22b) besteht, in deren eines Teil (22a) der Befestigungsring (20) mit einer Außenverzahnung (21) greift und deren anderes Teil (22b) mit der Kupplungsnabe (23) der angetriebenen Maschine in Zahneingriff steht.

5. Kupplung nach einem oder mehreren der Ansprüche 1 bis 3, dadurch gekennzeichnet, daß der Befestigungsring (32) durch zwei koaxiale Ringe (30, 31) aus elastomerem Material mit der innenverzahnten Kupplungshülse (33) verbunden ist.

6. Kupplung nach Anspruch 5, dadurch gekennzeichnet, daß die Ringe (30, 31) aus elastomerem Material miteinander verschraubt und zusätzlich im Verbindungsbereich auf der Kupplungsnabe (41) abgestützt sind.

7. Kupplung nach Anspruch 6, dadurch gekennzeichnet, daß zur Abstützung ein Nadellager (40) dient

8. Kupplung nach Anspruch 6, dadurch gekennzeichnet, daß zur Abstützung ein Gleitring eingesetzt ist.

9. Kupplung nach einem der Ansprüche 1, 2, 4 bis 8, dadurch gekennzeichnet, daß die Kupplungsnabe (7, 23, 41) aus Sintermetall besteht.

10. Kupplung nach einem der Ansprüche 1 bis 9, dadurch gekennzeichnet, daß die Kupplungshülse (3, 22, 33) als Kunststoffspritzgußteil gefertigt ist.

11. Kupplung nach einem der Ansprüche 1 bis 9, dadurch gekennzeichnet, daß der an der Antriebsmaschine zu befestigende Ring (1, 20, 32) als Spritzgußteil aus Kunststoff gefertigt ist.

Fig. 1

Fig. 2

EP 0 352 344 A1

Fig. 3

**Europäisches Patentamt**

# EUROPÄISCHER RECHERCHENBERICHT

Nummer der Anmeldung

EP 88 11 2077

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-U-8 702 203  (KUPPLUNGSTECHNIK)<br>* Insgesamt *<br>----- | 1-11 | F 16 D  3/00<br>F 16 D  3/18<br>F 16 D  3/74 |

**RECHERCHIERTE SACHGEBIETE (Int. Cl.4)**

F 16 D

Der vorliegende Recherchenbericht wurde für alle Patentansprüche erstellt

| Recherchenort | Abschlußdatum der Recherche | Prüfer |
|---|---|---|
| DEN HAAG | 13-03-1989 | BALDWIN D.R. |